# EUROPEAN PATENT SPECIFICATION

(11) **EP 3 367 810 B1**
(45) Date of publication and mention of the grant of the patent: **06.09.2023**
(21) Application number: 16794128.5
(22) Date of filing: 26.10.2016
(51) Int. Cl.: A23G 1/30, A23D 7/005, A23G 1/36, A23G 1/40, A23G 9/48

(54) **EMULSION AND PROCESS FOR MAKING SAME**
EMULSION UND VERFAHREN ZUR HERSTELLUNG DAVON
ÉMULSION ET SON PROCÉDÉ DE FABRICATION

(30) Priority: 26.10.2015 EP 15191487; 26.10.2015 EP 15191488
(43) Date of publication of application: 05.09.2018
(73) Proprietor: Cargill, Incorporated, Wayzata, MN 55391 (US)
(72) Inventor: DE CLERCQ, Nathalie, 9860 Oosterzele (BE); DE PAEPE, Jeroen, 9620 Zottegem (BE); HUIZENGA, Ellen, 1800 Vilvoorde (BE)
(74) Representative: Dottridge, Cass A.C.
(86) International application number: PCT/US2016/058795
(87) International publication number: WO 2017/075008

(56) References cited:
- EP-A1- 0 657 105
- EP-A1- 0 958 747
- EP-A1- 1 759 591
- EP-A1- 1 875 810
- US-B1- 6 174 555
- ROOS ET AL: "Melting and glass transitions of low molecular weight carbohydrates", CARBOHYDRATE RESEARCH, PERGAMON, GB, vol. 238, 15 January 1993 (1993-01-15), pages 39-48, XP026634925, ISSN: 0008-6215, DOI: 10.1016/0008-6215(93)87004-C [retrieved on 1993-01-15]
- Siegfried Walter Souci ET AL: "Food composition and nutrition tables; coconut oil (refined)" In: "Food composition and nutrition tables = Die Zusammensetzung der Lebensmittel Nährwert-Tabellen = La composition des aliments. Tableaux des valeurs nutritives,", 2008, Medpharm Scientific Publ. [u.a.], Stuttgart [u.a.], XP055336211, pages 199-200, the whole document
- Stephen T. Beckett: "Vitamins and minerals" In: "Industrial Chocolate Manufacture and Use", 1 January 2009 (2009-01-01), Blackwell Publishing Ltd., XP055669941, page 625,

## Description

### CROSS-REFERENCE TO RELATED APPLICATIONS

This application claims the benefit of European Patent Application No. 15191487.6 filed October 26, 2015, entitled EMULSION AND PROCESS FOR MAKING SAME, and European Patent Application No. 15191488.4, filed October 26, 2015, entitled EMULSION AND PROCESS FOR MAKING SAME,.

### FIELD OF THE INVENTION

The present invention relates to an emulsion of a aqueous phase in a lipid phase wherein non-fatty cocoa solids and/or non-fatty milk solids are present in the lipid phase. The present invention further relates to a process for making such an emulsion, and to food products comprising the same.

### BACKGROUND

Chocolate products contain significant amounts of both sugar and fat and are therefore rich in calories. In particular, chocolate products are used in chilled and frozen confectionery and desserts as coating layers or inclusion. It is an ongoing objective in the chocolate industry to provide chocolate products with reduced fat content and/or reduced calories. One approach has been to add water to chocolate products by forming emulsions with cocoa butter. Unfortunately, the preparation of such water-containing chocolates products is a difficult task: technologies that are currently available tend to have a negative impact on taste, texture, processability, stability and/or shelf-life. Even when only small amounts of water are added, this causes perceivable rheological changes in the product, usually accompanied by lumping and/or granulation and a coarse unacceptable mouth-feel. The addition of larger quantities of water, usually in the form of fresh cream or full cream milk, results in the production of "ganache" which is conventionally used as a short shelf-life filling for truffles or as a topping for confections and which is not suitable for use as a coating material. Ganache is the confectioner's term for a phase-inverted (i.e. oil-in-water) chocolate preparation and has a softer eating texture than normal chocolate and does not have the sought-after snap of traditional chocolate when broken.

US-A-5468509 describes a milk chocolate containing 1-16% water in which the chocolate preparation is produced by mixing cocoa butter with cocoa ingredients in the presence of an edible emulsifier, so that the ingredients are thoroughly coated with cocoa butter. The mixture is then blended with an aqueous phase prepared separately by mixing water, sweetener and milk solids to give a uniform mixture without resulting in high viscosity. The mixing is kept to a minimum speed to avoid exposing the cocoa solids in the cocoa butter to the water, whilst still producing a uniform mixture. If the cocoa solids in the cocoa butter are exposed to water, undesirable high viscosities such as gum formation and lumps of the mixed products as well as separation of the mixed products would result. Unfortunately, this slow mixing also results in an unstable product, with large water droplets, susceptible to phase separation, an undesirable mouth-feel and a much reduced shelf-life.

WO01/95737 discloses a process to overcome the fragility of the water-in-oil emulsion: a water-in-oil emulsion is prepared using equal parts of water and cocoa butter. Dark chocolate prepared by conventional methods including a conching step is then melted and added to the emulsion. This results in a dark chocolate containing 10% water. A fat suspension of milk powder is subsequently added, leading to a milk chocolate containing 8% water and 23% fat, in a first embodiment. In a second embodiment, the milk chocolate contains 17% water and 30% fat. The resulting suspension is mouldable and demouldable and can therefore be used to produce chocolate bars. However, no other sugar is added than the sugar present in the dark chocolate. Thus, the overall sugar content is reduced by 30 to 50% relative to conventional chocolate. The cocoa content is however not substantially changed. This would result in an undesirably bitter chocolate taste, not suitable for use with indulgent feed products such as ice-cream.

US6174555 discloses water-containing soft coating chocolate products for use in ice-cream confectionery. To maintain a good texture even at the extreme temperatures of a frozen product, water-in-oil emulsions are produced with vegetable oils and then added to a melted chocolate product. Thus, the resulting product will in fact have a higher fat content, a poor "snap" at room temperature and, because of the vegetable oil content, cannot be labeled as chocolate

EP0958747 discloses an ice cream coating made of an emulsion wherein the aqueous phase comprises a sweetener composition in an amount of about 82 wt% of sugar based on the total weight of the aqueous phase (syrup) and is dispersed throughout the lipid phase in the form of droplets. However, no hydrocolloid is present in the water phase.

EP1875810 discloses an ice cream coating made of an emulsion wherein the aqueous phase comprises a sweetener composition in an amount of at most 15wt% of sugar based on the total weight of the aqueous phase and a hydrocolloid dispersed in the water phase. The lipid phase does not explicitly comprise ions.

EP0657105 discloses an emulsion of an aqueous phase in a lipid phase, wherein the lipid phase comprises lipids in crystalline form together with non-fatty cocoa and/or milk solids, and the aqueous phase comprises a sweetener and a hydrocolloid. The lipid phase does not explicitly comprise ions. Moreover, the sweetener used is aspartame.

US2006/0121164 discloses chocolate products based on oil-in-water suspensions. These will inherently suffer from a number of drawbacks including reduced stability (compared to products based on water-in-oil suspensions), a dependency on structuring agents (to structure and sufficiently solidify the aqueous phase) and an undesirable texture and mouth-feel. In particular, it would be very difficult, if not impossible, to use the claimed technology to make chocolate products with a desirable "snap".

There is therefore still a need in the market for improved emulsion-based chocolate products with a reduced fat content and/or reduced calories. In particular there is a need to provide stable chocolate emulsion products which also have a snappy texture at colder temperatures, in particular at freezing temperatures. The present invention addresses this need.

### STATEMENTS OF THE INVENTION

In a first aspect of present invention, there is provided an emulsion of an aqueous phase in a lipid phase, wherein the lipid phase comprises lipids in crystalline form together with non-fatty cocoa and/or milk solids, and the aqueous phase comprises a sweetener composition in an amount of 30 to 95 wt% based on the total weight of the aqueous phase, and is dispersed throughout the lipid phase in the form of droplets, wherein the sweetener composition is selected from the group consisting of sucrose, fructose, glucose, honey, maple syrup, molasses, polyols, and combinations thereof, and characterized in that, at -18°C, the hardness of the emulsion, measured according to Method 1, is at least 3000g; and in that the aqueous phase comprises a hydrocolloid gelling agent and the lipid phase comprises an ion in an amount of 0.5 to 20 wt%, based on the weight of the hydrocolloid.

In a further aspect of the present invention, there is provided a food product comprising the above emulsion and further food ingredients.

According to yet another aspect of the present invention, there is provided a process to produce an emulsion of an aqueous phase in a lipid phase comprising the steps of:
(a) providing a stabilised aqueous phase which, at temperatures of 0°C or lower, is substantially non-liquid;
(b) emulsifying the aqueous phase with the lipid phase such that the aqueous phase is dispersed throughout the lipid phase in the form of droplets, and
(c) cooling the emulsion obtained in step (b),
wherein the lipid phase of the emulsion comprises non-fatty cocoa solids and/or non-fatty milk solids and the aqueous phase comprises a sweetener composition.

### DETAILED DESCRIPTION

The present invention relates to an emulsion of an aqueous phase in a lipid phase, wherein the lipid phase comprises lipids in crystalline form together with non-fatty cocoa and/or milk solids, and the aqueous phase comprises a sweetener composition and is dispersed throughout the lipid phase in the form of droplets, characterized in that the droplets are stabilised such that, at temperatures of 0°C or lower, they are substantially non-liquid.

### Emulsion

The term "emulsion" as used herein refers to an emulsion of an aqueous phase in a lipid phase, i.e. a water-in-oil type emulsion. The aqueous phase is the dispersed phase of the emulsion and the lipid phase is the continuous phase of the emulsion. Characteristics and composition of both the aqueous phase and the lipid phase are described in more detail below.

The emulsion will have a hard texture (also referred to as a "snappy texture" - i.e. producing a good "snap" when broken), especially at cold temperatures. Hardness is measured according to the Method 1, described below, at -18°C. The hardness of the emulsion of the present invention will be of 3000 g or higher, more preferably of 4000 to 20 000 g, more preferably of 5000 to 18 000 g, more preferably of 7000 to 16 000 g, even more preferably of 10 000 to 15 000 g.

As noted above, the emulsion comprises an aqueous and a lipid phase. The aqueous phase will preferably be present in an amount of 10 to 70wt%, preferably 20 to 65wt%, more preferably 30 to 60wt%, even more preferably 40 to 50wt%, based on the total weight of the emulsion. The lipid phase will preferably be present in an amount of 30 to 90wt%, preferably 35 to 80wt%, more preferably from 40 to 70wt%, even more preferably from 50 to 60wt%, based on the total weight of the emulsion. For example, the emulsion will comprise approximately 68% by weight aqueous phase and 32% by weight lipid phase. The emulsion may also comprise one or more additional ingredients such as emulsifiers, stabilising agents, flavouring agents and inclusions.

Suitable emulsifiers include polyglycerol polyricinoleate (PGPR), lecithin, sugar esters, emulsifying waxes, polyglycerol fatty acid esters, polysorbates, sorban tristearates (STSs), monoglycerides, diglycerides and any possible combinations of two or more thereof. Preferably, the emulsifier will comprise or consist of PGPR. Alternatively, preference will be given to so-called "higher melting emulsifiers". These are emulsifiers that have a higher melting point (or lower iodine value) than standard emulsifiers such as lecithin. Preferably, the emulsifier will have an iodine value below 20. Examples of suitable higher melting point emulsifiers include monoglycerides, diglycerides and STS. Emulsifiers will preferably be present in an amount of 0.5 to 5wt%, preferably 0.5 to 3wt%, more preferably 0.5 to 1wt%, based on the total weight of the emulsion.

Suitable stabilising agents include hydrocolloids, proteins, and fibres. Advantageously, the stabilising agent may comprise one or more fibres, such as citrus peel and/or citrus pulp fibres. Stabilising agents, will preferably be present in an amount of 0.5 to 10 wt%, more preferably 0.5 to 3 wt% for hydrocolloids and fibres, and 5 to 10 wt% for proteins, based on the total weight of the emulsion.

Other ingredients may include, for example, nuts, nut bits, almonds, almond bits, puffed rice, wheat or corn flakes, biscuit, biscuit pieces, fruit, fruit pieces, sugar crystals, flavoured sugar crystals, caramels, coconut pieces, marzipan, flavoured creams (such as mint, strawberry or orange creams), nougat, candies or candy pieces, and other typical inclusions well known to the skilled person.

### Lipid phase

The lipid phase comprises lipids in crystalline form together with one or more non-fatty solids. The lipids used in the lipid phase will be selected by a skilled person depending on the nature of the emulsion being produced and its intended end use. They will preferably be selected from the group consisting of: cocoa butter, modified cocoa butter or cocoa butter fractions, cocoa butter alternatives (such as cocoa butter equivalents, cocoa butter substitutes or cocoa butter replacers), anhydrous milk fat, and mixtures of two or more thereof. Cocoa butter alternatives may include, for instance, hydrogenated and non-hydrogenated vegetable fats such as palm or coconut oil, interesterified palm or coconut oil, and palm or coconut oil fractions. A suitable modified cocoa butter could include, for example, an interesterified cocoa butter and/or a cocoa butter fraction (e.g. fractionated cocoa butter stearins, whether produced from natural cocoa butter or interesterified cocoa butter). Preferably, the lipids will be selected from cocoa butter (preferably unmodified), anhydrous milk fat and mixtures thereof.

Alternatively, preference will be given to lipids or lipid compositions having a higher level of hardness. Indeed, lipids and lipid compositions having a higher hardness will provide greater stability and better snap to the final emulsion. Thus, the hardness of the lipids used in the emulsion of the present invention, measured at -18°C according to the process of Method 1, will be of 3000 g or higher, more preferably of 4000 to 20 000 g, more preferably of 5000 to 18 000 g, more preferably of 7000 to 16 000 g, even more preferably of 10 000 to 15 000 g. Examples of suitable lipids include tempered fats, fractionated fats (i.e. stearin or super-stearin fractions), interesterified fats (preferably enzymatically interesterified fats), and blends thereof, whether from cocoa nibs, other vegetable sources, or milk. Preference will be given, in particular, to fats with a slip melting point above 35°C, more preferably above 37°C, more preferably above 40°C. These may include cocoa butter lipids such as cocoa butter stearins, interesterified cocoa butter fractions, and tempered cocoa butters or cocoa butter fractions, hard milk fat fractions (with a higher stearin content than standard milk fat), cocoa butter alternatives with higher melting points (e.g. from palm, palm kernel, or coconut) and fractions and/or interesterified fractions thereof, and blends of two of more thereof, whether in the presence or absence of other fats, such as standard cocoa butter. In any event, the lipids will be capable of forming a substantially crystalline lipid phase around droplets of the aqueous phase, especially at -18°C.

The non-fatty solids dispersed in the lipid phase will preferably be selected from non-fatty cocoa solids, non-fatty milk solids and mixtures thereof. They may be present in an amount of from 5 to 40wt%, preferably from 10 to 40wt%, more preferably from 15 to 40wt%, even more preferably from 20 to 35wt%, yet even more preferably from 25 to 30wt% based on the total weight of the lipid phase.

The term "non-fatty cocoa solids" as used herein refers to the non-fatty components of the cocoa nib. For the purposes of the present invention, they may include full fat, low fat or defatted cocoa powder, cocoa liquor or mixtures thereof.

Similarly, non-fatty milk solids are any milk solids apart from milk fat. They may be provided in the form of full fat, low fat or defatted milk powder, concentrated milk or hydrated milk powder.

The lipid phase comprises one or more ions such as calcium or potassium and may comprise one or more additional ingredients dispersed therein. They may include, for instance, whey proteins and/or soy milk proteins, flavouring agents (such as vanilla or vanillin), and, possibly, sweeteners. Preferably, however, the sweetener will principally be provided in the aqueous phase. The lipid phase comprises one or more ions such as calcium or potassium. It is indeed believed that including ions in the lipid phase will encourage any hydrocolloids comprised in the emulsion to gel, or indeed stabilise those gels, thereby enhancing both its stability and hardness. Ions are present in an amount of 0.5 to 20 wt%, based on the weight of the hydrocolloid. For example, if alginate or pectin is used as a stabilising agent in the fat phase or as a gelling agent in the aqueous phase, 1-5 wt% (preferably about 2 wt%) calcium, based on the weight of alginate, may be added to the fat phase; if carrageenan or kappa carrageenan is used, the fat phase will preferably comprise 5-20 wt% (more preferably 10-15 wt%) potassium or potassium chloride, based on the weight of (kappa) carrageenan.

### Aqueous phase

The aqueous phase is formed from an aqueous composition dispersed throughout the lipid phase in the form of droplets. The aqueous composition will typically be a water-based composition (including for example milk-based compositions or fruit juice based compositions) and will comprise a hydrocolloid agent and a sweetener composition selected from the group consisting of sucrose, fructose, glucose, honey, maple syrup, molasses, polyols, and combinations thereof, to impart sweetness to the emulsion. Unfortunately, sweeteners such as sugar, or glucose or fructose syrups tend to prevent or reduce freezing at temperatures typically used to freeze food products. As such, and without wishing to be bound by theory, an aqueous phase consisting only of water and sugar may not freeze properly and will therefore reduce the snap - or hardness - of the resulting emulsion when used in or with frozen foods. The aqueous phase of the present invention will therefore be stabilised such that, at a temperature of -18°C, the dispersed droplets are substantially non-liquid.

The term "substantially non-liquid" as used herein means that, at these temperatures, the aqueous composition will not be free flowing. Preferably, it will be in the form of a gel or in a substantially solid, crystalline state (that is partially or fully frozen). Indeed, the aqueous phase may be stabilised through the use of a gelling agent, and/or through the deliberate selection of a sweetener composition which, because of its nature and concentration, takes on a partially or fully crystalline form at -18°C.

Besides hydrocolloids present in the aqueous phase (such as pectin, alginate and carrageenan), proteins (such as gelatin, casein, soy protein isolate, whey protein concentrate or whey protein isolate, and albumin), and mixtures of two or more can also be included. They will preferably be included in the aqueous composition in an amount of 0.5 to 10 wt%, more preferably 0.5 to 3 wt% for hydrocolloids and/or 5 to 10 wt% for proteins, based on the total weight of the aqueous composition.

The sweetener composition is selected from the group consisting of sucrose, fructose, glucose, honey, maple syrup, molasses, polyols, and combinations thereof. Any sugar, such as a monosaccharide or a disaccharide, can be used. Examples include sucrose, fructose, and glucose - which can be provided in crystalline, powder or liquid form or in the form, for instance, of concentrated fruit juices or fruit syrups. Examples of amorphous sweeteners include honey, maple syrup and/or molasses. Examples of suitable polyols include maltitol, sorbitol, erythritol, lactitol, xylitol and/or mannitol. Of course, any combination of the above sweeteners may also be used. For example, in order to reduce the caloric value of the chocolate product, a mixture of a polyol and sugar may be used.

The amount of sweetener included in the aqueous phase will be determined by a person skilled in the art depending on the desired sweetness of the emulsion and its intended end use, together with the type of sweetener or sweeteners being used. Sweeteners such as sucrose, fructose, glucose, honey, maple syrup, molasses, polyols and the like are included in the aqueous phase in an amount of from 30 to 95 wt%, preferably from 50 to 95 wt%, more preferably 60 to 95wt%, more preferably from 65 to 90wt%, even more preferably from 70 to 85wt%, yet more preferably from 75 to 80wt%, based on the total weight of the aqueous composition. Advantageously, the sweetener will be added at saturation or super-saturation levels, meaning that they can just be solubilised at 60-80°C but will rapidly crystallise and be in the glass state when cooled to a temperature of -18°C. This means, for instance, that sucrose will be added in an amount of 70 to 95 wt%, preferably of 75 to 90 wt%, more preferably 80 to 85 wt%, based on the total weight of the aqueous composition.

Preferably, the sweetener composition of the present invention will be selected such that the aqueous composition is able to fully or partially crystallise or is in a glass state at - 18°C. This will be particularly important when a gelling agent is not used to stabilise the aqueous solution but may of course be used in combination with a gelling agent. Suitable such sweetener compositions may include sucrose, fructose, glucose, maltose, polyols (such as maltitol and erythritol), and mixtures of two or more thereof.

The sweetener composition may be present in the aqueous composition in any form. For example, it may be dissolved, partially dissolved, dispersed or suspended in the aqueous composition. Preferably, it will be at least partially dissolved.

Including the sweetener composition in the aqueous phase has a number of advantages. For example, the cooling effect typically associated with polyols such as erythritol or xylitol can be limited or avoided by pre-dissolving them in the aqueous composition prior to incorporation in the chocolate product. Similarly, processing difficulties typically observed when trying to incorporate viscous sweeteners such as honey can be avoided as they too can be pre-dissolved in the aqueous composition.

In addition to the sweetener composition and the hydrocolloid, the aqueous composition may comprise other ingredients such as flavouring agents, nutraceuticals (such antioxidants, vitamins, and/or minerals), fruit juice, fruit juice concentrates and/or ions. Ions will preferably be used in combination with hydrocolloids in the aqueous phase. Suitable ions include calcium, potassium, and potassium chloride, as described above, and will advantageously be present in an amount of 0.5 to 20 wt%, based on the weight of the hydrocolloid. For example, if alginate or pectin is used as a gelling agent in the aqueous phase, 1-5 wt% (preferably about 2 wt%) calcium, based on the weight of alginate, may also be added to the aqueous phase; if carrageenan or kappa carrageenan is used, the aqueous phase will preferably comprise 5-20 wt% (more preferably 10-15 wt%) potassium or potassium chloride, based on the weight of (kappa) carrageenan.

The aqueous composition may also comprise a milk product. The milk product may be a defatted, low fat or full fat milk product, preferably selected from the group consisting of: milk itself, dehydrated or partially dehydrated milk (e.g. evaporated or sweetened condensed milk), milk powder, cream, soy milk products and mixtures of two or more thereof. Advantageously, the milk product will be a skimmed milk product. Where milk itself is used, it may be used in combination with water to form the aqueous composition or it may be used alone (i.e. without water).

The aqueous composition is present in the emulsion in the form of an aqueous phase dispersed throughout the lipid phase in the form of droplets. The droplets will preferably be small in size. Advantageously they will have an average diameter of no more than 30µm, preferably of no more than 20µm, more preferably of no more than 15µm. According to certain embodiments, the droplets may have an average diameter as small as 0.1µm, 0.5µm or 1µm. According to one possible embodiment, the droplets will have an average diameter of 2-15pm, preferably of 5-15µm. This small droplet size is preferably achieved by high shear mixing during emulsification process.

The emulsion of the present invention will preferably be a chocolate or chocolate compound product and will be particularly suitable for use as a coating, filling, or inclusion in different types of food products.

### Food product

The present invention provides a food product comprising an emulsion as defined above together with one or more further ingredients. Preferably, the food product will be a frozen food product. A frozen food product, for the purpose of the present invention, is one that is chilled to and stored at a temperature below 0°C, preferably at a temperature between -40°C and 0°C, more preferably between -30°C and -4°C, more preferably between -20°C and -10°C, even more preferably between -20°C and -15°C. Advantageously, it will be one that is consumed in its frozen state such as ice-cream or sorbet, or other frozen confections (referred to herein as "ice cream products").

The emulsion may be used, for example, as a coating, filling and/or inclusion in the food product.

As used herein, "coating" means one or more layers encasing a food product - whether fully or only in part (i.e. present only on part of the food product, such as a layer deposited on top or on one or more surface of the food product). Typically a coating layer has a thickness of from 0.5mm to 1cm, more preferably from 1mm to 5mm, even more preferably from 1mm to 3mm, yet more preferably from 1mm to 2mm, most preferably from 1mm to 1.5mm. Any suitable coating method known in the art can be used to obtain a food product coated with the emulsion of the present invention, including enrobing, dipping, spraying, water fall or curtain, showering or bottoming.

When used as a filling, the emulsion of the present invention will be fully or partially encased by the food product. The filling can be one or more continuous fillings or layers, or it can be present as smaller particulate filling dispersed throughout the food product, e.g. in the form of chunks, chips, or flakes (also referred to as "inclusions"). Any method known in the art can be used to include the emulsion of the present invention as a filing in a food product. For example, the emulsion may be mixed into the food product in particulate form or it may be injected into the food product.

Thus, by way of example, the emulsions of the present invention may be used as inclusions in stracciatella-type or "chocolate-chip" scoopable ice cream products, as coatings for ice-cream products provided on a stick (such as Magnum^{®} type ice creams), or as coatings and/ or fillings for cones for Cornetto^{®}-type ice cream products.

Advantageously, the emulsion can be heated, prior to coating or filling, without disrupting the droplets of aqueous composition dispersed therein. Preferably, it will be heated to a temperature from 10 to 50°C, even more preferably from 15 to 45°C, more preferably from 20 to 40°C, even more preferably from 25 to 35°C, yet more preferably from 30 to 35°C.

### Process

The invention further relates to a process for the production of an emulsion of an aqueous phase in a lipid phase comprising the steps of:
(a) providing a stabilised aqueous phase which, at a temperature of -18°C, is substantially non-liquid;
(b) emulsifying the aqueous phase with a lipid phase such that the aqueous phase is dispersed throughout the lipid phase in the form of droplets, and
(c) cooling the emulsion obtained in step (b),
wherein the lipid phase of the emulsion comprises non-fatty cocoa solids and/or non-fatty milk solids and the aqueous phase comprises a sweetener composition.

The terms "emulsion", "aqueous phase", "lipid phase", etc., are defined above.

Preferably, step (b) will be performed in a two-step process, comprising a first step (b1) in which a first lipid composition and the aqueous composition are mixed under medium to high shear to produce a first emulsion, and a second step (b2) in which a second lipid composition is added to the first emulsion and mixed under medium to low shear to produce the final emulsion. It has been found that this two-step addition of the lipid phase, under different shear rates, has the advantage of producing an emulsion that is more stable (i.e. with reduced water migration outside the emulsion over time) and snappier/harder, with reduced brittleness and elasticity, in particular under cold to freezing temperatures, compared to an emulsion produced in a single step. When using such a two-step emulsification process, the non-fatty cocoa and/or milk solids will preferably be added to the emulsion as part of the second lipid composition (i.e. in step b2).

Preferably the first lipid composition added in step b1 will consist of 20 to 85wt%, more preferably 30 to 80wt%, more preferably 40 to 75wt%, even more preferably 50 to 70wt%, yet more preferably from 55 to 65wt% of the total lipid composition forming the lipid phase in the final emulsion. Emulsifiers, as described above, may be added to the emulsion in step b1 and/or step b2.

The aqueous phase and the lipid phase will advantageously be emulsified at a temperature of from 40 to 65°C, more preferably from 45 to 60°C, even more preferably from 50 to 60°C. Preferably, both the aqueous phase and the lipid phase will be pre-heated before emulsification at above mentioned temperatures. The aqueous phase will preferably be heated to a temperature of from 40 to 70°C, more preferably 45 to 65°C, even more preferably from 50 to 60°C before emulsification. The lipid phase will preferably be heated to a temperature of from 40 to 65°C, more preferably from 45 to 60°C, even more preferably from 50 to 60°C before emulsification.

Emulsification of step b1 will be performed until a homogenous first emulsion is obtained, i.e. until the aqueous phase is dispersed as droplets throughout the lipid phase, said droplets preferably having a particle size as described above. Typically the emulsification time will be from 1 to 60minutes, more preferably from 5 to 50minutes, even more preferably from 10 to 40minutes, yet more preferably from 15 to 35minutes, most preferably from 20 to 30minutes.

It is preferably performed under medium to high shear, more preferably under high shear. Medium shear means a shear of 5000rpm. High shear means a shear of above 5000rpm, preferably of 6000rpm of higher, more preferably of 7000rpm or higher, even more preferably of 10000rpm and higher, yet more preferably from 10000rpm to 20000rpm. Thus step b1 is preferably performed at a shear of from 5000rpm to 20000rpm, more preferably from 7000rpm to 15000rpm, even more preferably from 10000rpm to 15000rpm.

Step b1 can be done in any suitable equipment able to provide high shear as mentioned above and preferably able to keep the temperature of the phases relatively constant during emulsification. The aqueous phase and the lipid phase may be added together into the equipment before emulsification starts; alternatively, one or both of the phases can be added progressively to during mixing. Emulsifier may be added to one or both phases prior to emulsification or it may be added during the one or more emulsification steps.

In step b2, the second lipid composition is added under medium to low shear to the first emulsion formed in step b1. Step b2 can be performed with any suitable type of equipment providing the required medium to low shear. Medium shear means a shear of 5000rpm. Low shear means a shear below 5000rpm. Thus preferably step b2 is performed at a shear of 5000rpm to 1000rpm, preferably of 5000rpm to 2000rpm, more preferably of 4000rpm to 3000rpm. As noted above, the second lipid composition may comprise the non-fatty cocoa solids and/or non-fatty milk solids. Preferably, therefore, the second lipid composition will comprise enough lipids to substantially coat all the non-fatty solids and form a homogeneous mixture.

Ideally, the final emulsion obtained in step b2 will be cooled, in step c, to a storage temperature of between -40°C and 0°C, preferably between -30°C and -4°C, more preferably between -20°C and -10°C, even more preferably between -20°C and -15°C.

The present invention further relates to an emulsion obtained by the process of the present invention. As explained above, an emulsion produced according to the process of the present invention has increased stability, increased snap/hardness, in particular under cold to freezing temperatures, and reduced brittleness and elasticity compared to an emulsion produced by a standard process, e.g. where all ingredients, in particular the lipid phase, are added in one step of the process and where the aqueous phase is not stabilised.

### Method 1: Hardness measurement method

TA.XT Plus texture analyser is used with 4mm stainless steel probe with flat bottom (SMS/P4). The test mode is set on compression mode, the test speed is set at 0.5mm/sec and the distance of penetration is set at 10mm. 20g of sample is poured into a cup with diameter 6cm. The cup is put in the freezer at -18°C overnight. The cup is taken out of the freezer and measured within 5 minutes. Hardness is expressed in grams.

Certain embodiments of the present invention will now be illustrated in the following, non-limiting, examples.

### EXAMPLES

### Example 1: emulsion process

The equipment used for emulsification is an Esco-Labor, type EL-3 PM. The operating temperature of the water bath and screen of the Esco-Labor is put at 50°C. The list of ingredients for several emulsions according to the invention are provided in tables 1 to 4, below.

Standard deodorised cocoa butter (from Cargill) and the emulsifier are heated until 40°C, blended in the Esco-Labor with the scraper of the Esco-Labor set at 80 RPM, to form a lipid phase.

In a recipient, the water is heated up to 60°C and the sugar is added and dissolved to form the aqueous phase, followed by any gelling agent and ions.

The aqueous phase is added to the above lipid phase (addition time 1 minute) in the Esco-Labor and blended under high shear, at 10000RPM during 1 minute; simultaneously the scraper is applied for 1 minute at 80RPM. Mixing under high shear is continued during 30 seconds then shear is progressively reduced until low shear of 3000RPM is reached. The cocoa liquor is added and mixed for 1 minute at 3000RPM, simultaneously; the scraper is applied for 1 minute at 80RPM.

**Table 1**

| Ingredient | wt% |
|---|---|
| Cocoa liquor (Cargill, 54wt% cocoa butter, 46wt% cocoa powder) | 14 |
| Fractionated enzymatically interesterified cocoa butter - stearin fraction (Cargill) | 3.5 |
| Standard cocoa butter (Cargill) | 20.5 |
| Crystalline table sugar | 39.5 |
| Water | 19.5 |
| STS | 0.98 |
| Carrageenan | 2 |
| KCl | 0.02 |

**Table 2 (not part of the invention)**

| Ingredient | wt% |
|---|---|
| Cocoa liquor (Cargill, 54wt% cocoa butter, 46wt% cocoa powder) | 14.4 |
| Fractionated enzymatically interesterified cocoa butter - stearin fraction (Cargill) | 3.6 |
| Standard cocoa butter (Cargill) | 21 |
| Crystalline table sugar | 50 |
| Water | 10 |
| monoglycerides | 1 |

**Table 3**

| Ingredient | wt% |
|---|---|
| Cocoa liquor (Cargill, 54wt% cocoa butter, 46wt% cocoa powder) | 17.5 |
| Standard cocoa butter (Cargill) | 20.5 |
| Crystalline table sugar | 39.5 |
| Water | 19.5 |
| PGPR | 0.98 |
| Carrageenan | 2 |
| KCl | 0.02 |

**Table 4 (not part of the invention)**

| Ingredient | wt% |
|---|---|
| Cocoa liquor (Cargill, 54wt% cocoa butter, 46wt% cocoa powder) | 18 |
| Standard cocoa butter (Cargill) | 21 |
| Crystalline table sugar | 50 |
| Water | 10 |
| PGPR | 1 |

Hardness is measured (triple measurement) for samples stored at -18°C. The resulting emulsions have good snap.

## Claims

1. An emulsion of an aqueous phase in a lipid phase, wherein the lipid phase comprises lipids in crystalline form together with non-fatty cocoa and/or milk solids, and the aqueous phase comprises a sweetener composition in an amount of 30 to 95 wt% based on the total weight of the aqueous phase, and is dispersed throughout the lipid phase in the form of droplets, wherein the sweetener composition is selected from the group consisting of sucrose, fructose, glucose, honey, maple syrup, molasses, polyols, and combinations thereof, and **characterized in that**, at -18°C, the hardness of the emulsion, measured according to Method 1, is at least 3000g; and **in that** the aqueous phase comprises a hydrocolloid gelling agent and the lipid phase comprises an ion in an amount of 0.5 to 20 wt%, based on the weight of the hydrocolloid.

2. The emulsion according to claim 1, **characterised in that** the lipid phase comprises lipids that have been tempered, fractionated, and/or interesterified, preferably interesterified cocoa butter stearin fractions.

3. The emulsion according to claim 1 or claim 2, **characterised in that** the aqueous phase is substantially non-liquid at -18°C.

4. The emulsion according to claim 3, **characterised in that** the aqueous phase is substantially crystalline at -18°C.

5. The emulsion according to any one of the preceding claims, **characterised in that** it comprises a higher melting point emulsifier.

6. The emulsion according to any one of the preceding claims, **characterized in that** it comprises:
• From 10 to 70wt% of aqueous phase, based on the total weight of the emulsion,
• From 30 to 90wt% of lipid phase, based on the total weight of the emulsion.

7. A food product comprising the emulsion of any one of claims 1 to 6 and further food ingredients.

8. The food product according to claim 7 **characterized in that** the emulsion is present as a coating of and/or as a filling in said food product.

9. The food product according to claim 8 **characterized in that** the food product is an ice cream product.

10. A process to produce an emulsion of an aqueous phase in a lipid phase comprising the steps of:
(a) providing an aqueous phase;
(b) emulsifying the aqueous phase with a lipid phase such that the aqueous phase is dispersed throughout the lipid phase in the form of droplets, and
(c) cooling the emulsion obtained in step (b),
wherein the lipid phase of the emulsion comprises non-fatty cocoa solids and/or non-fatty milk solids and the aqueous phase comprises a sweetener composition in an amount of 30 to 95 wt% based on the total weight of the aqueous phase, wherein the sweetener composition is selected from the group consisting of sucrose, fructose, glucose, honey, maple syrup, molasses, polyols, and combinations thereof, and **characterised in that**, at - 18°C, the aqueous phase is substantially non-liquid and the lipid phase has a hardness, measured according to Method 1, of at least 3000g, and **in that** the aqueous phase comprises a hydrocolloid gelling agent and the lipid phase comprises an ion in an amount of 0.5 to 20 wt%, based on the weight of the hydrocolloid.

11. A process according to claim 10, **characterised in that** step (b) comprises two steps:
- a first step (b1) in which a first lipid composition and the aqueous phase are mixed under medium to high shear to produce a first emulsion, and
- a second step (b2) in which a second lipid composition is added to the first emulsion and mixed under medium to low shear to produce a final emulsion.

12. A process according to claim 11, **characterised in that** the non-fatty cocoa solids and/or non-fatty milk solids are added to the emulsion as part of the second lipid composition in step (b2).

## Patentansprüche

1. Emulsion einer wässrigen Phase in einer Lipidphase, wobei die Lipidphase Lipide in kristalliner Form zusammen mit nicht fetthaltigen Kakao- und/oder Milchfeststoffen umfasst, und die wässrige Phase eine Süßstoffzusammensetzung in einer Menge zu 30 bis 95 Gew.-% bezogen auf das Gesamtgewicht der wässrigen Phase umfasst und während der Lipidphase in der Form von Tröpfchen dispergiert wird, wobei die Süßstoffzusammensetzung ausgewählt ist aus der Gruppe bestehend aus Saccharose, Fructose, Glucose, Honig, Ahornsirup, Melasse, Polyolen und Kombinationen davon, und
**dadurch gekennzeichnet ist, dass** bei -18 °C die Härte der Emulsion, gemessen nach Verfahren 1, mindestens 3000 g beträgt; und dadurch, dass die wässrige Phase ein Hydrokolloidgeliermittel umfasst und die Lipidphase ein Ion in einer Menge zu 0,5 bis 20 Gew.-%, bezogen auf das Gewicht des Hydrokolloids, umfasst.

2. Emulsion nach Anspruch 1, **dadurch gekennzeichnet, dass** die Lipidphase Lipide umfasst, die getempert, fraktioniert und/oder umgeestert wurden, vorzugsweise umgeesterte Kakaobutter-Stearin-Fraktionen.

3. Emulsion nach Anspruch 1 oder 2, **dadurch gekennzeichnet, dass** die wässrige Phase bei -18 °C im Wesentlichen nicht flüssig ist.

4. Emulsion nach Anspruch 3, **dadurch gekennzeichnet, dass** die wässrige Phase bei -18 °C im Wesentlichen kristallin ist.

5. Emulsion nach einem der vorstehenden Ansprüche, **dadurch gekennzeichnet, dass** sie einen Emulgator mit höherem Schmelzpunkt umfasst.

6. Zusammensetzung nach einem der vorstehenden Ansprüche, **dadurch gekennzeichnet, dass** sie umfasst:
• Zu 10 bis 70 Gew.-% eine wässrige Phase, bezogen auf das Gesamtgewicht der Emulsion,
• Zu 30 bis 90 Gew.-% eine Lipidphase, bezogen auf das Gesamtgewicht der Emulsion.

7. Lebensmittelerzeugnis, umfassend die Emulsion nach einem der Ansprüche 1 bis 6 und weitere Lebensmittelinhaltsstoffe.

8. Lebensmittelerzeugnis nach Anspruch 7,
**dadurch gekennzeichnet, dass** die Emulsion als eine Beschichtung und/oder als eine Füllung in dem Lebensmittelerzeugnis vorhanden ist.

9. Lebensmittelerzeugnis nach Anspruch 8, **dadurch gekennzeichnet, dass** das Lebensmittelerzeugnis ein Eiscremeerzeugnis ist.

10. Verfahren zum Herstellen einer Emulsion einer wässrigen Phase in einer Lipidphase, umfassend die Schritte:
(a) Bereitstellen einer wässrigen Phase,
(b) Emulgieren der wässrigen Phase mit einer Lipidphase, derart, dass die wässrige Phase während der Lipidphase in der Form von Tröpfchen dispergiert wird, und
(c) Abkühlen der in Schritt (b) erhaltenen Emulsion,
wobei die Lipidphase der Emulsion nicht fetthaltige Kakaofestfeststoffe und/oder nicht fetthaltige Milchfeststoffe umfasst und die wässrige Phase eine Süßstoffzusammensetzung in einer Menge zu 30 bis 95 Gew.-% bezogen auf dem Gesamtgewicht der wässrigen Phase umfasst, wobei die Süßstoffzusammensetzung ausgewählt ist aus der Gruppe bestehend aus Saccharose, Fructose, Glucose, Honig, Ahornsirup, Melasse, Polyole und Kombinationen davon, und
**dadurch gekennzeichnet ist, dass** at-18 °C die wässrige Phase im Wesentlichen nicht flüssig ist und die Lipidphase eine Härte, gemessen nach Verfahren 1, von mindestens 3000 g aufweist, und dadurch, dass die wässrige Phase ein Hydrokolloidgeliermittel umfasst und die Lipidphase ein Ion in einer Menge zu 0,5 bis 20 Gew.-%, bezogen auf das Gewicht des Hydrokolloids, umfasst.

11. Verfahren nach Anspruch 10, **dadurch gekennzeichnet, dass** Schritt (b) zwei Schritte umfasst:
- einen ersten Schritt (b1), in dem eine erste Lipidzusammensetzung und die wässrige Phase unter einem Medium zu hoher Scherung gemischt werden, um eine erste Emulsion zu erzeugen, und
- einen zweiten Schritt (b2), in dem eine zweite Lipidzusammensetzung zu der ersten Emulsion hinzugefügt und unter einem Medium zu niedriger Scherung gemischt wird, um eine endgültige Emulsion zu erzeugen.

12. Verfahren nach Anspruch 11, **dadurch gekennzeichnet, dass** die nicht fetthaltigen Kakaofeststoffe und/oder die nicht fetthaltigen Milchfeststoffe zu der Emulsion als Teil der zweiten Lipidzusammensetzung in Schritt (b2) hinzugefügt werden.

## Revendications

1. Émulsion d'une phase aqueuse dans une phase lipidique, la phase lipidique comprenant des lipides sous forme cristalline conjointement avec des solides non gras de cacao et/ou de lait, et la phase aqueuse comprenant une composition édulcorante en une quantité de 30 à 95 % en poids en fonction du poids total de la phase aqueuse, et étant dispersée sur l'ensemble de la phase lipidique sous la forme de gouttelettes, la composition édulcorante étant choisie dans le groupe constitué par saccharose, fructose, glucose, miel, sirop d'érable, mélasses, polyols, et combinaisons de ceux-ci, et **caractérisée en ce que,** à -18 °C, la dureté de l'émulsion, mesurée selon le Procédé 1, vaut au moins 3000 g ; et **en ce que** la phase aqueuse comprend un agent gélifiant hydrocolloïde et la phase lipidique comprend un ion en une quantité de 0,5 à 20 % en poids, en fonction du poids de l'hydrocolloïde.

2. Émulsion selon la revendication 1, **caractérisée en ce que** la phase lipidique comprend des lipides qui ont été soumis à un tempérage, fractionnés, et/ou interestérifiés, de préférence des fractions interestérifiées de stéarine de beurre de cacao.

3. Émulsion selon la revendication 1 ou la revendication 2,
**caractérisée en ce que** la phase aqueuse est sensiblement non liquide à -18 °C.

4. Émulsion selon la revendication 3, **caractérisée en ce que** la phase aqueuse est sensiblement cristalline à -18 °C.

5. Émulsion selon l'une quelconque des revendications précédentes, **caractérisée en ce qu'**elle comprend un émulsifiant à point de fusion plus élevé.

6. Émulsion selon l'une quelconque des revendications précédentes, **caractérisée en ce qu'**elle comprend :
• de 10 à 70 % en poids de phase aqueuse, en fonction du poids total de l'émulsion,
• de 30 à 90 % en poids de phase lipidique, en fonction du poids total de l'émulsion.

7. Produit alimentaire comprenant l'émulsion selon l'une quelconque des revendications 1 à 6 et d'autres ingrédients alimentaires.

8. Produit alimentaire selon la revendication 7 **caractérisé en ce que** l'émulsion est présente en tant qu'enrobage dudit, et/ou en tant que fourrage dans ledit, produit alimentaire.

9. Produit alimentaire selon la revendication 8 **caractérisé en ce que** le produit alimentaire est un produit de crème glacée.

10. Processus pour produire une émulsion d'une phase aqueuse dans une phase lipidique comprenant les étapes consistant à :
(a) fournir une phase aqueuse ;
(b) émulsifier la phase aqueuse avec une phase lipidique de sorte que la phase aqueuse est dispersée sur l'ensemble de la phase lipidique sous la forme de gouttelettes, et
(c) refroidir l'émulsion obtenue à l'étape (b),
la phase lipidique de l'émulsion comprenant des solides non gras de cacao et/ou des solides non gras de lait et la phase aqueuse comprenant une composition édulcorante en une quantité de 30 à 95 % en poids en fonction du poids total de la phase aqueuse, la composition édulcorante étant choisie dans le groupe constitué par saccharose, fructose, glucose, miel, sirop d'érable, mélasses, polyols, et des combinaisons de ceux-ci, et **caractérisé en ce que,** à -18 °C, la phase aqueuse est sensiblement non liquide et la phase lipidique a une dureté, mesurée selon le Procédé 1, d'au moins 3000 g, et **en ce que** la phase aqueuse comprend un agent gélifiant hydrocolloïde et la phase lipidique comprend un ion en une quantité de 0,5 à 20 % en poids, en fonction du poids de l'hydrocolloïde.

11. Processus selon la revendication 10 **caractérisé en ce que** l'étape (b) comprend deux étapes :
- une première étape (b1) dans laquelle une première composition lipidique et la phase aqueuse sont mélangées sous cisaillement moyen à élevé pour produire une première émulsion, et
- une seconde étape (b2) dans laquelle une seconde composition lipidique est ajoutée à la première émulsion et mélangée sous cisaillement moyen à bas pour produire une émulsion finale.

12. Processus selon la revendication 11, **caractérisé en ce que** les solides non gras de cacao et/ou les solides non gras de lait sont ajoutés à l'émulsion dans le cadre de la seconde composition lipidique à l'étape (b2).
